Europäisches Patentamt

(19) European Patent Office

Office européen des brevets

(11) Publication number: **0 259 143**
**A2**

# EUROPEAN PATENT APPLICATION

(21) Application number: **87307714.3**

(22) Date of filing: **01.09.87**

(51) Int. Cl.⁴: **G 06 F 1/02**
**G 01 S 7/06**

(30) Priority: **02.09.86 GB 8621200**

(43) Date of publication of application:
**09.03.88 Bulletin 88/10**

(84) Designated Contracting States: **DE FR GB**

(71) Applicant: **BRITISH AEROSPACE PUBLIC LIMITED COMPANY**
**11 Strand**
**London WC2N 5JT (GB)**

(72) Inventor: **Dewhirst, Clifford British Aerospace Public Ltd.Co**
**Army Weapons Division Six Hills Way**
**Stevenage Hertfordshire, SG1 2AS (GB)**

**Smith, Graig N. British Aerospace Public Ltd.Co**
**Army Weapons Division Six Hills Way**
**Stevenage Hertfordshire, SG1 2AS (GB)**

(74) Representative: **Dowler, Edward Charles et al**
**British Aerospace Public Limited Company Corporate Patents Department Brooklands Road**
**Weybridge Surrey, KT13 OSJ (GB)**

The title of the invention has been amended (Guidelines for Examination in the EPO, A-III, 7.3).

(54) **Signal processing using a multi-dimensional look-up table.**

(57) A series of discriminants may be applied to a multi-dimensional look up table with a view to making a decision on what the combination of discriminant values represent. The discriminants might be say phase, amplitude and polarisation of a radar return from a possible target. To reduce the number of look-up table dimensions and render the decision process more efficient, the discriminants are subjected to spectral decomposition to produce a reduced number of output discriminants which nevertheless may, given certain maximum entropy optimisation concepts, contain all the information required for the decision.

## Description

<p style="text-align:center">Signal Processing</p>

This invention relates to a method and apparatus for processing signals, more particularly but not exclusively for processing signals arising from a surveillance operation with a view to recognising the presence of a target within the surveyed scene.

Our patent application no. 860527 discloses a target recognition system wherein a combination of signal samples indicative of respective discriminants relevant to a surveyed scene is used to address a memory containing a predetermined data look-up table, each item in the table being indicative of whether or not the associated combination of discriminant values represents a target.

By way of example, the discriminants may include the amplitudes, phases and/or polarisation indicative parameters of the range channel signals in a radar surveillance system. Although the look-up table may comprise a series of component tables, ie so that the overall look-up operation is done as a sequence of component operations each involving a subset of the chosen discriminants, in overall terms the number of dimensions N of the look-up table equals the number of discriminants and the look-up table requires to contain a number of bit locations equal to:-

$$\prod_{i=1}^{i=N} Q_i$$

where $Q_i$ is the chosen number of quantitization levels for each dimension. As a matter of practicality, this limits the number of dimensions and number of quantization levels. To improve matters in this respect, the recognition system may be designed with a view to improving the so-called "entropy-flow" within the system. Basically this means recognising that each discriminant normally varies through a value range which is not the same for all the discriminants. Thus, by adapting for each discriminant the number of quantitization levels and/or the range over which they extend (perhaps in non-linear manner) in dependence upon the nature of that discriminant, the efficiency of the system can be greatly improved. One factor which needs to be taken into account in order to achieve better entropy flow is the degree of correlation between, or lack of independence of, some or even all of the discriminants. For example, say that the value of one discriminant is likely to be within some component value range of which the position, within an overall range of values for that discriminant, is seen always to vary in dependence upon the value of another discriminant. Then, if that one discriminant is assigned a number of fixed quantization levels extending over the possible overall range, the system is less than fully efficient because thereby the system is being sized to allow for some combinations of values of the two discriminants which will never occur. To take account of discriminant correlation, our afore-mentioned patent application No. 8602527 discloses the idea of using, as a discriminant applied to the look-up table, ie as one of the table dimensions, some chosen combination of the or some of the other discriminants. This suggestion is a useful one. However, it will be appreciated that this degree of correlation and inter-dependence factor is quite complex - for the above example, it is simply said that one discriminant has a value dependent on the other, but this also implies that the other discriminant has a value dependent on the one. Then, given that even all of the chosen discriminants may have some sort of inter-dependence, it will be realised that the achievement of maximum entropy flow is not at all a simple matter.

It is known in the radar art, to use a process called spectral decomposition where received radar signals are mathematically transformed, processed and then used to reconstruct an image which may, for example, have better resolution than an image formed directly from the original signals. Examples of such prior art proposals are contained in GB Patent Specification Nos.2173663; 2168870 and 1319740. Herein a spectral decomposition process is used in a different way and for a different purpose namely, preferably in association with certain maximum entropy and maximum likelihood techniques, to assist in the optimisation of a real time decision making capability in relation to hyperspace problems where the number of dimensions (factors involved in the decisions) is comparatively large.

One object of the present invention is to provide a discriminant processing method and apparatus using same which leads to better system entropy flow. Another object is to provide a data processing system and method which generally facilitates certain multi-dimensional hyperspace problems.

According to one aspect of the invention, there is provided a signal processing method wherein a group of signals are spectrally decomposed by combining said signals with a set of Eigenvectors of the group so as to transform the group into a group of new uncorrelated signals and wherein said new signals are applied to data storage means so as to address data locations of a multi-dimensional look-up table of data contained in the storage means.

According to a second aspect of the invention, there is provided a signal processing apparatus comprising receiving means for receiving a group of signals to be processed, spectral decomposition means for combining said signals with a set of Eigenvectors of the group so as to transform said group into a group of new uncorrelated signals, and data storage means containing data items organised as a multidimensional look up table, said new signals being applied to the storage means so as to address locations in the table.

According to a third aspect of the invention, there is provided a computer which is operative to take a group of stochastic variables, to spectrally decompose said group by combining the variables with each other and with a set of pre-calculated Eigenvectors of the group so as to produce a group of new uncorrelated variables, to use said new variables to address respective dimensions of a multi-dimensional data look-up table contained in storage means of the computer, and to read the content of the so-addressed look-up table location.

According to a fouth aspect of the invention, there is provided a method of recognising a predetermined feature within a surveyed scene, the method comprising forming a group of signals representing discriminants indicative of the scene, spectrally decomposing said group by combining the signals with a set of Eigenvectors of the group so as to transform the group into a group of new uncorrelated signals, and applying said new signals to storage means containing data indicative of whether or not respective combinations of the values of the new signals represent said feature.

According to a fifth aspect, there is provided target recognition apparatus comprising scene surveillance means for forming signals representing discriminants indicative of the scene, spectral decomposition means for receiving a group of said signals and for combining the signals with a set of Eigenvectors of the group so as to transform said group into a group of new uncorrelated signals, and storage means connected to receive said new signals and containing data indicative of whether or not respective combinations of the values of the new signals are representative of a target.

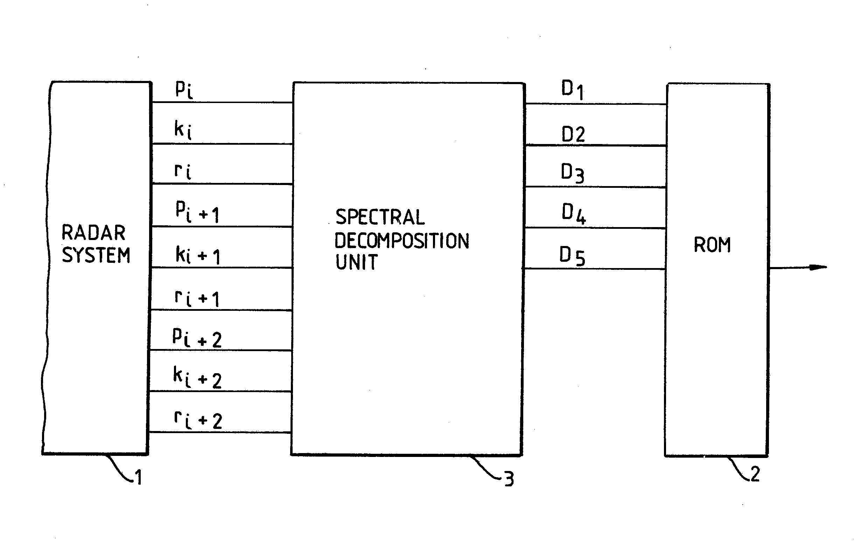

For a better understanding of the invention, reference will be made, by way of example, to the accompanying drawing, the single figure of which is a block diagram of part of a radar target detection system.

The signal processing method to be disclosed herein is founded upon the known techniques of spectral decomposition, the basis of which is as follows:-

Let a group of stochastic variables be represented by vector r then:

$$\mathbf{r} = (r_1, r_2, r_3, \ldots r_d)$$

where d is the number of variables in the group. Let $\mathbf{CV}$ represent the corresponding covariance matrix i.e.

$$\mathbf{CV}_{ij} = \overline{\Sigma} \, (r_i - \overline{r}_i)(r_j - \overline{r}_j)/n$$

wherein $\overline{r}_i$ is the sample mean of the ith variable (Note that a correlation matrix could be used instead of the covariance matrix).

Clearly such a matrix is symmetric and of size (d x d) so that $q(\lambda) = |\mathbf{CV} - \lambda\mathbf{I}|$ is a dth order polynomial in $\lambda$. The d roots of $q(\lambda), \lambda_1, \lambda_2, \ldots \lambda_d$ are called Eigenvalues of $\mathbf{CV}$. The symmetrical nature of $\mathbf{CV}$ ensures that the Eigenvalues are both positive and real. Some of the $\lambda_i$ will be equal if $q(\lambda)$ has multiple roots.

For each i = 1, ...., d, $|\mathbf{CV} - \lambda_i\mathbf{I}| = 0$, hence $\mathbf{CV} - \lambda_i\mathbf{I}$ is singular. Also there must exist a non zero vector V satisfying:

$$\mathbf{CV}.\mathbf{V} = \lambda_i.\mathbf{V}$$

Each such vector V is called an eigenvector of $\mathbf{CV}$ for the eigenvalue $\lambda_i$. The set of all eigenvectors for $\lambda_i$ forms a subspace which is called the eigenspace of $\mathbf{CV}$ for $\lambda_i$.

By taking the dot product of the discriminant vector $\mathbf{r}$ and the eigenvector $\mathbf{V_i}$, then it is possible to decompose the original signals into eigenspace. This is the so-called **principal component transformation** and it is an orthogonal transformation which transforms any set of variables into a set of new variables that are uncorrelated with each other. It should be noted that the eigenvalue associated with a new variable gives the relative variance for that variable and that, if the original set of variables are multinormal, then the new variables will be independent.

The principal component transformation may well produce a set of new variables with widely differing degress of importance (i.e. eigenvalues). However, it is possible to perform spectral decomposition into eigen space and standardise the variance of each variable at the same time. This is the well known **Mahalanobis transformation**. Such a transformation would be attractive where it was desired to have a target lookup table that had an equal number of quantization steps in each dimension.

Referring now to the drawings, a radar surveillance system 1 produces successive samples of each of three discriminants, namely the phase p. polarisation factor k and amplitude r of the radar return signal. Each decision, about whether or not a target exists at a corresponding portion of the surveyed scene, is to be made on the basis of three successive sets of the samples i.e. each decision is to take into account a group of nine variables, the first group comprising samples $k_1, p_1, r_1, k_2, p_2, r_2, k_3, p_3$ and $r_3$. This is to be done, however, using a look-up table 2 having five dimensions. Therefore, each group of nine variables is passed to computer unit 3 wherein there is performed a principal component transformation, as described earlier, so as to produce a new set of five variables or dimensions $d_1$ to $d_5$ where:-

$$d_1 = e_1k_1 + e_2p_1 + e_3r_1 + e_4k_2 + e_5p_2 + e_6r_2 + e_7k_3 + e_8p_3 + e_9r_3$$
$$d_2 = f_1k_1 + f_2p_1 + f_3r_1 + f_4k_2 + f_5p_2 + f_6r_2 + f_7k_3 + f_8p_3 + f_9r_3$$
$$d_3 = g_1k_1 + g_2p_1 + g_3r_1 + g_4k_2 + g_5p_2 + g_6r_2 + g_7k_3 + g_8p_3 + g_9r_3$$
$$d_4 = h_1k_1 + h_2p_1 + h_3r_1 + h_4k_2 + h_5p_2 + h_6r_2 + h_7k_3 + h_8p_3 + h_9r_3$$
$$d_5 = j_1k_1 + j_2p_1 + j_3r_1 + j_4k_2 + j_5p_2 + j_6r_2 + j_7k_3 + j_8p_3 + j_9r_3$$

Where constants $e_q$ to $j_q$ are qth elements of eigenvectors 1-5 respectively. The constants are pre-calculated on the basis of experimental data and introduced as constant multiplication factors into the control program for unit 3.

Of course, the number of discriminants produced by the unit 3 can be other than five - the number is matched to the chosen number of dimensions of the look-up table 2. The function of the unit 2, in effect, is to produce for a given number of input variables and a given number of output variables (look-up table dimensions) a maximum or at least improved entropy through flow.

Generally, if there are 'n' input variables $x_1$, $x_2..x_n$ to be taken into account at each decision or look-up operation and 'm' output discriminants (look-up table dimensions) $d_1$, $d_2 .. d_m$ then:-

$$Y_i = \sum_{j=1}^{n} \alpha_{ij} x_j$$

On the other hand, for a given capacity ie number of bits of the look-up table, the number of look-up table dimensions available depends upon the number of quantization levels needed for each dimension which, in turn, depends upon the degree of variation of each of the new variables produced by the transformation in the unit 3. That degree of variation has a relationship with the Eigenvalues associated with the dimension and hence, knowing the Eigenvalues, the required number of quantization levels $D_i$ for a given total number of look-up table bits Bt can be obtained. The appropriate expression is:-

$$D_i = K \sqrt{\lambda_i}$$

where

$$K \triangleq \left[ \frac{Bt^2}{\prod_{i=1}^{i=d} \lambda_i} \right]^{d/2}$$

The number of dimensions in the look-up table is equal to the number of dimensional quantization levels greater than unity (after adjusting the values of Di as necessary to an integer).

The use of the techniques disclosed herein enables problems in hyperspace to be solved directly as opposed to solving problems as a series of decoupled low dimensional problems.

A typical known multisample radar system uses a time sequence of radar returns which are examined one at a time and, if given a number of returns out of the sequence satisfy defined criteria, then a target is considered to have been detected.

Traditionally such a system examines each return independently. By treating the line sequence as a series of dependent cross coupled returns i.e. as one multidimensional problem as disclosed herein, then any information contained in the sample to sample line fluctuations of targets and clutter will be extracted.

The first embodiment of the invention comprised a radar surveillance system and involved the making of decisions based on a comparatively large number of discriminants ie sometimes implying a comparatively large number of look-up table dimensions. The invention can also be applied to two dimensional image processing, however. Thus, in a second embodiment (not shown) a scene is viewed by a thermal imager producing a 32x32 pixel two dimensional image in which it is desired to identify a 10x10 pixel reference patch. Taken a pixel at a time the reference path may be thought of as a signal vector 100 elements long. Using the same principle as was described for the first embodiment, there is performed a principal component transformation on the covariance (or correlation) matrix of this vector. For a specified size of lookup table it is then possible to extract a number of discriminants, in an optimum fashion, in a space of a specified number of dimensions and quantized to a given number of levels. Having done this the data may be transformed into eigen space by spectral decomposition and the original scene searched using the likelihood ratio as a discriminant in the normal manner.

By way of example, let the extracted number of dimensions be represented by D. Each spectral decomposition will take 100.D summations of products and constants. Letting the time taken to perform a multiplication and one addition be $\underline{t}$ seconds, then the time required to perform the decomposition will be 100.D.t seconds.

Searching a 32x32 pixel patch by a 10x10 patch gives $23^2$ i.e. 529 spectral decompositions. The time taken to search the scene will thus be equal to 52900.D.t seconds. As will be appreciated, the inventive method and apparatus are not limited to the target recognition field but are of possible application in various situations where a group of variables, especially stochastic variables, for example a group of samples of one or more received time varying signals, are to be taken and assessed against some overall criteria. Thus the invention could be embodied in the form of a computer which has been programmed to read a group of variables, to spectrally-decompose them as disclosed earlier using pre-calculated group Eigenvectors, and then to perform a multidimensional look-up table operation using the new variables to address the respective table dimensions.

## Claims

1. A signal processing method wherein a group of signals are spectrally decomposed by combining said signals with a set of Eigenvectors of the group so as to transform the group into a group of new uncorrelated signals and wherein said new signals are applied to data storage means so as to address data locations of a multi-dimensional look-up table of data contained in the storage means.

2. A signal processing apparatus comprising receiving means for receiving a group of signals to be processed, spectral de-composition means for combining said signals with a set of Eigenvectors of the group so as to transform said group into a group of new uncorrelated signals, and data storage means containing data items organised as a multidimensional look up table, said new signals being applied to the storage means so as to address locations in the table.

3. A computer which is operative to take a group of stochastic variables, to spectrally decompose said group by combining the variables with each other and with a set of pre-calculated Eigenvectors of the group so as to produce a group of new uncorrelated variables, to use said new variables to address respective dimensions of a multi-dimensional data look-up table contained in storage means of the computer, and to read the content of the so-addressed look-up table location.

4. A method of recognising a predetermined feature within a surveyed scene, the method comprising forming a group of signals representing discriminants indicative of the scene, spectrally decomposing said group by combining the signals with a set of Eigenvectors of the group so as to transform the group into a group of new uncorrelated signals, and applying said new signals to storage means containing data indicative of whether or not respective combinations of the values of the new signals represent said feature.

5. A target recognition apparatus comprising scene surveillance means for forming signals representing discriminants indicative of the scene, spectral decomposition means for receiving a group of said signals and for combining the signals with a set of Eigenvectors of the group so as to transform said group into a group of new uncorrelated signals, and storage means connected to receive said new signals and containing data indicative of whether or not respective combinations of the values of the new signals are representative of a target.

6. A method and/or apparatus substantially as hereinbefore described with reference to the accompanying drawing.

5

RADAR SYSTEM

SPECTRAL DECOMPOSITION UNIT

ROM

$P_i$  $k_i$  $r_i$  $P_{i+1}$  $k_{i+1}$  $r_{i+1}$  $P_{i+2}$  $k_{i+2}$  $r_{i+2}$

$D_1$  $D_2$  $D_3$  $D_4$  $D_5$

1

3

2